(19) Europäisches Patentamt / European Patent Office / Office européen des brevets

(11) **EP 2 472 345 B1**

(12) **EUROPEAN PATENT SPECIFICATION**

(45) Date of publication and mention
of the grant of the patent:
**07.03.2018 Bulletin 2018/10**

(51) Int Cl.:
**G05B 19/418** (2006.01) **G06Q 10/00** (2012.01)

(21) Application number: **10197228.9**

(22) Date of filing: **29.12.2010**

(54) **Traceability of packaged consumer products**

Verfolgbarkeit verpackter Verbraucherprodukte

Traçabilité de produits de consommation conditionnés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.07.2012 Bulletin 2012/27**

(73) Proprietor: **Tetra Laval Holdings & Finance S.A.
1009 Pully (CH)**

(72) Inventor: **BERGMAN, Bjorn
246 51, LODDEKOPINGE (SE)**

(74) Representative: **Tetra Pak - Patent Attorneys SE
AB Tetra Pak
Patent Department
Ruben Rausings gata
221 86 Lund (SE)**

(56) References cited:
**WO-A1-2008/096016     JP-A- 2008 056 433
US-A1- 2004 078 289     US-A1- 2005 075 891
US-A1- 2005 203 653**

• **UGS: "The way to higher product quality and
better warranty management: Digital
manufacturing for product and process
traceability", INTERNET CITATION, April 2005
(2005-04), XP002378109, Retrieved from the
Internet:
URL:http://www.ugs.com/products/tecnomatix
/docs/wp_traceability_imperative.p [retrieved on
2006-04-24]**

## Description

## TECHNICAL FIELD OF THE INVENTION

The present invention relates in general to packaging of consumer products, and in particular to traceability of Packaged Consumer Products, specifically perishable products such as pourable food products, to which the following description specifically refers purely by way of example.

## BACKGROUND ART

As is known, on a factory floor of a food packaging plant, several specifically-aimed processes are generally performed, including incoming food and packaging material storage, food processing, food packaging, and package warehousing. With specific reference to pourable food products, food packaging is performed in Packaging Lines, each of which is an assembly of machines and equipments for the production and handling of packages, and includes a Filling Machine for the production of the packages, followed by one or more defined configurations of downstream Distribution Equipments such as, accumulators, straw applicators, film wrappers, and cardboard packers, connected to the Filling Machine via Conveyors, for the handling of the packages.

A typical example of this type of packages is the parallelepiped-shaped package for liquid or pourable food products known as Tetra Brik Aseptic®, which is made by folding and sealing a laminated web of packaging material.

The packaging material has a multilayer sheet structure substantially comprising one or more stiffening and strengthening base layers typically made of a fibrous material, e.g. paper, or mineral-filled polypropylene material, covered on both sides with a number of heat-seal plastic material layers, e.g. polyethylene film. In the case of aseptic packages for long-storage products, such as UHT milk, the packaging material also comprises a gas-and light-barrier material layer, e.g. aluminium foil or ethyl vinyl alcohol (EVOH) film, which is superimposed on a heat-seal plastic material layer, and is in turn covered with another heat-seal plastic material layer forming the inner face of the package eventually contacting the food product.

Packages of this sort are produced on fully automatic Filling Machines, wherein a continuous vertical tube is formed from the web-fed packaging material; which is sterilized by applying a chemical sterilizing agent such as a hydrogen peroxide solution, which, once sterilization is completed, is removed, e.g. evaporated by heating, from the surfaces of the packaging material; and the sterilized web is maintained in a closed, sterile environment, and is folded and sealed longitudinally to form the vertical tube. The tube is then filled downwards with the sterilized or sterile-processed pourable food product, and is fed along a vertical path to a forming station, where it is gripped along equally spaced cross sections by two pairs of jaws, which act cyclically and successively on the tube, and seal the packaging material of tube to form a continuous strip of pillow packs connected to one another by transverse sealing strips. Pillow packs are separated from one another by cutting the relative sealing strips, and are conveyed to a final folding station where they are folded mechanically into the finished, e.g. substantially parallelepiped-shaped, packages.

Alternatively, the packaging material may be cut into blanks, which are formed into packages on forming spindles, and the packages are filled with food product and sealed. One example of this type of package is the so-called "gable-top" package known as Tetra Rex®.

Previous-generation Packaging Lines generally have a decentralized control, poor or even no configuration flexibility, and different communication channels and automation solutions and hardware, and generally require customization of the line automation software in the Filling Machine and each Distribution Equipment.

Therefore, the automation and control systems for the previous-generation Packaging Lines could not provide the flexibility and functionality features required to satisfy the ever-increasing market demand for food safety and traceability, and for higher production versatility. However, despite their age, many legacy automation and control systems continue to provide valuable functionality that warrants their upgrade, and hence represent a huge capital investment that production management wants to prolong.

In view of that, an ever-increasing need was hence felt for a packaging plant automation evolution, in particular for new generation Packaging Lines featuring integrated solutions such as centralized and robust automation control, increased configuration flexibility, same communication channels and automation solutions and hardware, and no need for customization of the line automation software in the Filling Machines and Distribution Equipments.

New generation Packaging Lines allow new valuable functionalities to be easily implemented, which were hardly implementable or even impossible to be implemented in the last generation Packaging Lines. One of these new valuable functionalities, conceivably one of the most important ones, is package traceability, which allow allegedly or effectively defective packaged consumer products to be timely withdrawn/recalled from the market.

US 2005/203653 A1 discloses a process management system having a plurality of processes, each process producing a group of products from at least one kind of parts by applying a predetermined operation thereto. A plurality of processes are hierarchically connected so that a final product is obtained from a plurality of parts. Part data and production data is generated. The part data is data related to connection information, and the part data includes at least usage time data. The product data is data related to the connection information and including production time data. A ratio calculating system is provided to calculate a ratio of the products obtained with use of the parts to the group of products in accordance with the production time data and the usage time data.

JP 2008 056433 A discloses that in order to surely collect only a commodity group having the risk of a failure when inferior goods (for example, the deterioration of quality, the intrusion of a foreign matter or the tear of a packaging bag) are found after a packaging process and an extent of the failure is limited in commodities manufactured within a specific time before and after the date and time of manufacture, or to surely avoid shipping to the market, loading start date and time information and loading end date and time information at each pallet are obtained, shipment results of each of the pallets are obtained, and the obtained loading start date and time information and the loading end date and time information are associated with the shipment results through corresponding pallet identification information, and stored in order to generate a database, and the database is retrieved while having the given pallet loading time and date as a retrieving key or the pallet loading date and time calculated from the given manufacture date and time in the consideration of a known delay time as the retrieving key, and the pallet where the commodity is loaded or the shipment destination to which the commodity is shipped is extracted.

## OBJECT AND SUMMARY OF THE INVENTION

A reliable package traceability would require marking each packaged consumer product and each pack of packaged consumer products with associated unique identifiers each time an operation to be traced is carried out on the packaged consumer products or packs of packaged consumer products, and then logging the marked identifiers in a repository for later querying.

However, this approach is computational resource demanding and hence may prove to be hardly practicable in Packaging Systems with high package production rates.

Therefore, a solution that allows an industrially acceptable trade-off to be achieved between traceability reliability, on the one hand, and computational resource demand on the other hand has been investigated.

The objective of present invention is hence to provide a traceability solution which allows this need to be met.

This objective is achieved by the present invention in that it relates to a Packaging System, as defined in the appended claims.

## BRIEF DESCRIPTION OF THE DRAWINGS

Figure 1 shows a schematic layout of an integrated Packaging System; and
Figure 2 shows a diagram depicting the time developments of production-related quantities in a Packaging Line.

## DETAILED DESCRIPTION OF PREFERRED EMBODIMENTS OF THE INVENTION

The following description is provided to enable a person skilled in the art to make and use the invention. Various modifications to the embodiments will be readily apparent to those skilled in the art, without departing from the scope of the present invention as claimed. Thus, the present invention is not intended to be limited to the embodiments shown, but is to be accorded the widest scope consistent with the principles and features disclosed herein and defined in the appended claims.

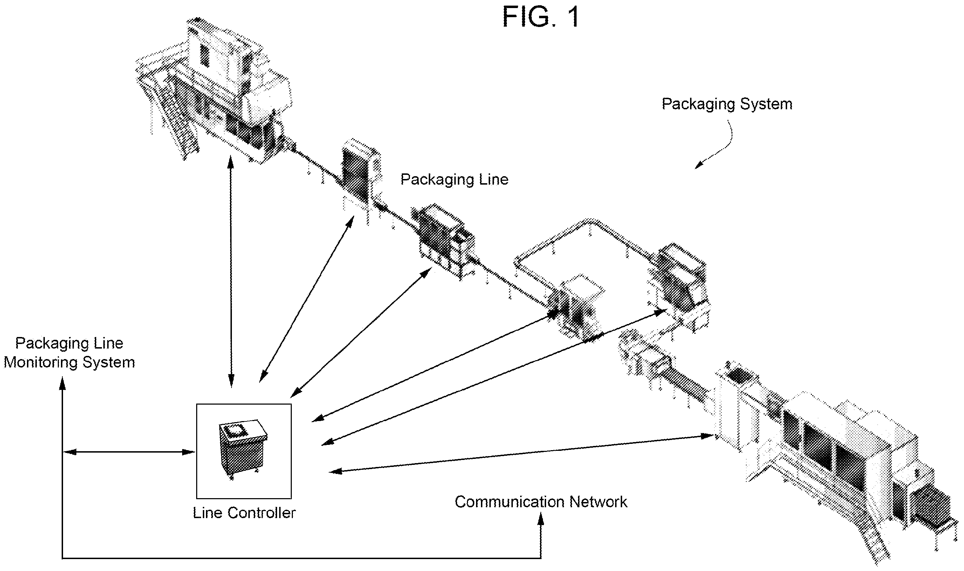

Figure 1 shows a schematic layout of a new generation Packaging System in a Packaging Plant.

The Packaging System is of the type described in WO 2009/083594, WO 2009/083595, WO 2009/083597 and WO 2009/083598, all in the name of the Applicant, and includes one or more Packaging Lines, only one of which is shown in Figure 1, and which are automatically configurable to produce Packaged Consumer Products.

A Packaging Line includes:

- a Filling Machine or Equipment followed by one or more downstream Distribution Equipments such as, Accumulators, Straw Applicators, Cap Applicators, Handle Applicators, Cardboard Packers, Film Wrappers, Configuration Switches, Dynamic Switches, and Pallet Systems, which are cascade connected to each other and to the Filling Machine (FM) via Conveyors (C), which are all known per se and hence will not be described in detail. In particular, the Filling Machine is operable to selectively produce one or different types of sealed packages, which contain one or different food products introduced in the sealed packages by pouring, and which are made of a multilayer sheet (laminated) packaging material including at least one stiffening and strengthening base layer and one or more heat-seal plastic layers, and each Distribution Equipment is operable to carry out a corresponding packaging operation on incoming individual or packs of sealed packages;
- a Line Controller designed to manage configuration, communication and control of the Packaging Line with the aim of optimizing the interaction between the Filling Machine and the Distribution Equipments to improve the Packaging Line performance and product transportation during production;
- an Overhead Message Display (not shown in Figure 1) designed to provide a basic visual information on the operation of the Filling Machine and Distribution Equipments, such as production information, equipment stop, material request, line phase, etc.; and

• a Communication Network comprising a switch-based Ethernet Network with e.g. a star-topology, and designed to connect the Line Controller to the Filling Machine, the Distribution Equipments, and the Message Display; a Fiedlbus, e.g. DeviceNet, network designed to connect the Line Controller to the Conveyors, a digital I/O designed to connect the Line Controller to a Conveyor Lubricating Unit; and a safety bus designed to provide a safety serial communication between zone-based safety PLCs in the Line Controller, the Filling Machine, the Distribution Equipments, and the Conveyors, to allow an easier fulfilment of the legal requirements in Integrated Manufacturing Systems (e.g.: ISO 11161, Packaging line CE marking at customer site).

The Packaging System further includes:

• a Marking System (not shown in Figure 1) designed to apply graphical information, such as production and best-before dates, product description, production batch IDs, (bar)codes, etc.. onto individual or packs of Packaged Consumer Products produced by the Packaging Line(s), and comprising one or more Marking Stations provided along the Packaging Line and each comprising one or more Marking Devices, such as inkjet and/or thermal transfer and/or laser Printers, operable to print graphical information onto individual or packs of Packaged Consumer Products in response to received Marking Command(s), and Labellers operable to print graphical information on blank labels and then apply printed labels onto individual or packs of Packaged Consumer Products in response to received Marking Command(s); and

• a Verification System (not shown in Figure 1) designed to verify whether graphical information actually applied onto the individual or packs of Packaged Consumer Products correspond to the one that the Marking System was instructed to apply, and including a Vision System, for example based on cameras, and/or one or more Identification Devices, for example (bar)code readers.

The Packaging System may be of the Single-Line type, namely including only one Packaging Line, of the Multi-Line type, namely including a plurality of operatively stand-alone Packaging Lines, i.e., Packaging Lines which do not share Distribution Equipments, each provided with an associated Line Controller, or of the Multi-Switch type, namely with a plurality of operatively cooperating Packaging Lines, i.e., Packaging Lines arranged to share one or more Distribution Equipments, so increasing the flexibility and the production variability for the customer. In a Multi-Switch Packaging System, either a single-tier or a two-tier control architecture may be provided. In a single-tier control architecture, only a single, common Line Controller is provided, which is programmed to manage configuration, communication and control of all the Packaging Lines with the aim of optimizing the interaction between the Filling Machines and the Distribution Equipments to improve the Multi-Switch Packaging System performance and product transportation during production, while in a two-tier control architecture, both a slave Line Controller for each Packaging Line and a master Line Controller for the slave Line Controllers are provided.

A Line Controller includes a stand-alone console or cabinet equipped with a Human-Machine Interface made up of a display panel and a keyboard, and a PLC-based control system designed to store and execute modular-architecture software applications or tools configured to cooperate with the local software modules in the Filling Machine and the Distribution Equipments via a standard communication to control and supervise operation of the associated Packaging Line.

The modular-architecture software and the standard interface allow different Packaging Line complexities (different layout and variety of Filling Machines and Distribution Equipments) to be managed without any customization in the software of the single equipment. Compared to the previous generation of Packaging Lines, this allows a standard software in the Filling Machines and Distribution Equipments to be maintained and all the customized parameters to be collected in the Line Controller. The advantage of that is a high level of standardization in the Filling Machines and Distribution Equipments and hence an easy maintenance of them. For the purpose of the present invention, by the expression "software applications" it is intended a defined subclass of computer software that employs the capabilities of a computer directly to a task that the user wishes to perform.

In the end, the Packaging System further includes a Packaging Line Monitoring System designed to cooperate with the Line Controller(s) and, through the Communication Network(s), directly with Filling Machine(s) and Distribution Equipment(s) in the Packaging Line(s), to measure, analyze, and optimize the operational performance of each Packaging Line. In particular, in a Multi-Switch Packaging System with a single-tier control architecture, the Packaging Line Monitoring System is programmed to cooperate with the common Line Controller, while in a Multi-Switch Packaging System with a two-tier control architecture the Packaging Line Monitoring System is programmed to cooperate either with the master Line Controller, or with the slave Line Controllers, or with both the master Line Controller and the slave Line Controllers.

The Packaging Line Monitoring System is a data management system designed to monitor operational performance of the Filling Machine(s) and Distribution Equipments in the Packaging Line(s), and to maximise operational equipment performance based on plant floor data. The Packaging Line Monitoring System also provides powerful and easy-to-use tools to analyze operational equipment performance and process behaviour. Operational performance data are automatically captured and logged at the Packaging Line(s). Local manual input interaction makes data comprehensive. Information distribution to the factory office level allows real-time supervision and historical analysis. The Packaging Line Monitoring System allows optimum results to be achieved through the timely identification of downtime issues. The analysis of the production performance details identifies the critical performing equipment, and charts and reports are the tools to identify highest downtime reasons.

Another one of the main functionalities of the Packaging Line Monitoring System is package traceability and process monitoring. Through a Graphical User Interface, one or more Operator Sheets may be provided which are the electronic replacement of the production paper handwritten documents. Data can be entered on operator demand or automatically requested by the system based on equipment events. Data entry is possible through manual input or using a barcode scanner. Data logged in the Operator Sheet(s) may for example be operator production checks, material used by the Packaging Line(s), such as packaging material, strips, caps, straws, etc., special production events such as production batch ID, production batch start and stop, etc., operator IDs, locally-defined custom events, etc. Based on the data logged at the Filling Machine(s), the Packaging Line Monitoring System carries out a performance analysis and provides Operator Sheet Report(s). This allows monitoring of process parameters and critical control points during production. Process monitoring gives the possibility to execute advanced troubleshooting on machine process variables.

The Packaging Line Monitoring System is also configured to allow package traceability to be time synchronized. In particular, data logging time is synchronized with a central time synchronization system, and the dating unit clock is synchronized locally by the Packaging Line Monitoring System data logging system clock.

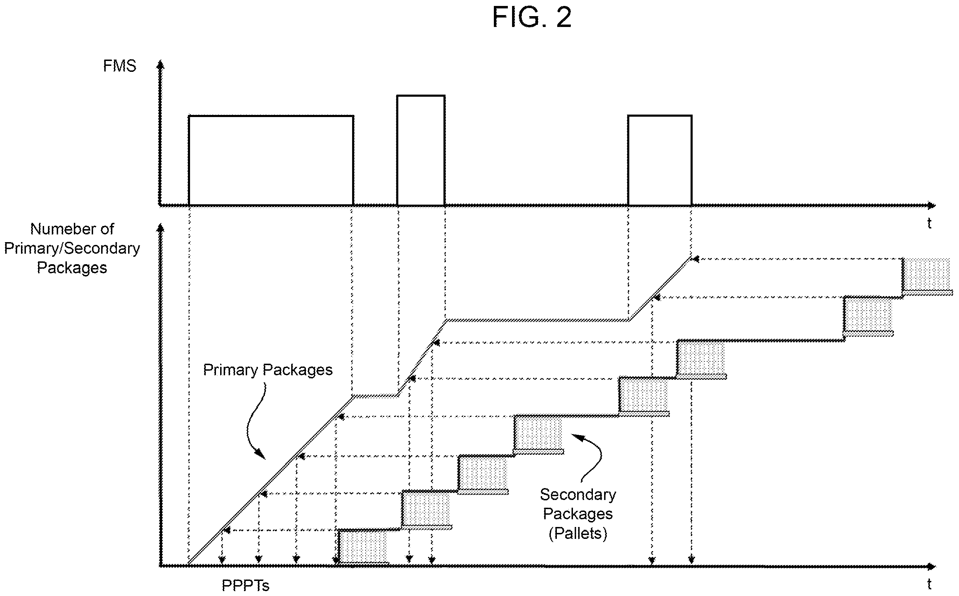

Package traceability is obtained by implementing in the Packaging Line Monitoring System a Package Tracing Algorithm described hereinafter with reference to Figure 2, which depicts, in the upper part, development over time of the Filling Machine Speed, expressed in number of Primary Packages produced per time unit, during a Production Batch, and, in the lower part, a corresponding cumulative number of Primary Packages and Secondary Packages (Pallets in Figure 2) produced over time from the beginning of a Production Batch.

As a matter of language convenience, in the following description the term "Primary Package" will be used to indicate a Packaged Consumer Product outputted by a Filling Machine, while the term "Secondary Package" will be used to indicate any pack of Packaged Consumer Products, such as individual pallets of Packaged Consumer Products outputted by a Palletizer and/or individual trays of Packaged Consumer Products.

The Package Tracing Algorithm is aimed at allowing Secondary Packages containing Primary Packages which prove to be or are allegedly defective to be timely identified and withdrawn from the market, with a reduced tolerance. When Secondary Packages are Pallet of Primary Packages, this tolerance may be very low, in the order of $\pm$ 1 Pallet.

In particular, the Package Tracing Algorithm is based on the following assumptions, which allow Primary Packages to be reliably traced as described hereinafter with a reduced computational resource demand:

- a Packaging Line is completely emptied after a production batch has been completed;
- a Packaging Line includes a Filling Machine at the beginning and a Palletizer at the end, and hence Primary Packages produced from several Filling Machines may not be mixed along the Packaging Line. However, the same Palletizer may be shared by, and may serve several Packaging Lines at the same time as long as it can handle package flows separately; and
- all Distribution Equipments in a Packaging Line operate as FIFO (First In First Out) Equipments, namely the first Primary Package that is inputted to a Distribution Equipment is the first Primary Package that is outputted by the same Distribution Equipment. A limited deviation from this assumption is allowed provided that the maximum number of Primary Packages which may swap in a Distribution Equipment is small as compared to the number of Primary Packages in a Secondary package. This assumption results in a Packaging Line between a Filling Machine and a Palletizer being viewed as a pipe.

The Package Tracing Algorithm is inputted with the following data:

- Filling Machine Speed versus time, expressed in number of Primary Packages produced per time unit;
- Number of Primary Packages in a Secondary Package;
- Unique Identifier for each Secondary Package, and
- Sequential Order in which the Secondary Packages are produced during a Production Batch, for example defined by the completion times of the Secondary Packages.

The Package Tracing Algorithm includes the following steps described hereinafter.

The first step of the Package Tracing Algorithm is computing, for each Secondary Package produced during a Production Batch, a Primary Package Sequence Number for the first Primary Package in the Secondary Package and a Primary Package Sequence Number for the last Primary Package in the Secondary Package, wherein a Primary Package Sequence Number represents the sequential, time-ascending order number of a Primary Package in the Production Batch, is initialized to 1 at the beginning of any new Production Batch and is increased by one unit each time a Primary Package is produced.

In particular, the Primary Package Sequence Numbers for the first and the last Primary Packages in a Secondary Package are computed using the following formulas:

$$PPSN_{(FIRST)} = 1 + \sum_{i=1}^{FP-1} PPISP_i$$

$$PPSN_{(LAST)} = \sum_{i=1}^{FP} PPISP_i$$

wherein:

$PPSN$ is a Primary Package Sequence Number;
$FP$ is a Secondary Package Sequence Number, which represents the sequential, time-ascending order number of the Secondary Package in question in the Production Batch, is initialized to 1 at the beginning of any new Production Batch and is increased by one unit each time a Secondary Package is produced;
$i$ is a Secondary Package Sequence Index, which indexes the Secondary Packages in a Production Batch; and
$PPISP_i$ is the number of Primary Packages in a Secondary Package with Secondary Package Sequence Index equal to i.

The second step of the Package Tracing Algorithm is computing, for each Secondary Package produced during a Production Batch, a Primary Package Production Time for the first Primary Package in the Secondary Package and a Primary Package Production Time for the last Primary Package in the Secondary Package, based on the corresponding Primary Package Sequence Numbers, wherein a Primary Package Production Time represents the time when a Primary Package is produced from the beginning of the Production Batch.

In particular, Primary Package Production Times for both the first and the last Primary Packages in a Secondary Package are computed based on the following formulas, which relate Primary Package Production Times and Primary Package Sequence Numbers:

$$PPSN_{(FIRST)} = \int_{BST}^{PPPT_{(FIRST)}} FSM(t)\, dt$$

$$PPSN_{(LAST)} = \int_{BST}^{PPPT_{(LAST)}} FSM(t)\, dt$$

wherein:

$PPSN$ is a Primary Package Sequence Number;
$PPPT$ is a Primary Package Production Time;
$BST$ is a Production Batch Start Time; and
$FSM(t)$ represents the development over time of the Production Speed, expressed in number of packages produced per time unit, of the Filling Machine during a Production Batch.

For a Filling Machine with a Production Speed which develops over time as depicted in Figure 2, Primary Package Production Times, which are the exponents of the time integrals in the above formulas, may practically be computed by firstly splitting the development over time of the Production Speed of the Filling Machine into sequential Time Sections (TS), such that in each Time Section the Filling Machine Speed has a constant value, and computing the number of Primary Packages produced from the beginning of a Production Batch to the end of a Time Section based on the following formula:

$$ACCNP = \sum_{i=1}^{TSSN} NP_i$$

where:

$ACCNP$ is the number of Primary Packages produced from the beginning of a Production Batch to the end of a Time Section,
$TSSN$ is a Time Section Sequence Number, which represents a sequential, time-ascending order number of the Time Section in the sequence of Time Sections and is initialized to 1 at the beginning of a Production Batch, and
$NP_i$ is the number of Primary Packages produced during Time Section with Time Section Sequence Number equal to $i$, wherein $NP_i = S \cdot D_i$, where $S$ is the Filling Machine Speed, expressed in Primary Packages per second, during the Time Section, and $D_i$ is the Time Section Duration, expressed in seconds.

Once the number of Primary Packages produced from the beginning of a Production Batch to the end of a Time Section has been computed, the first Time Section in the sequence of Time Sections that satisfies the following relation is identified:

$$ACCNP \geq PPSN$$

Based on the Filling Machine Speed in the identified Time Section, the Primary Package Production Times *PPPT* are computed based using the following formula:

$$PPPT = AT - \frac{ACCNP - PPSN}{S}$$

where **AT** is the start time, expressed in date and time, of the identified Time Section.

The third and last step of the Package Tracing Algorithm is storing in a repository of the Packaging Line Monitoring System, Primary Package Production Times for both the first and the last Primary Packages in the Secondary Packages produced during a Production Batch, along with associated Secondary Package Identifiers.

The repository may be queried at any time to fetch out Identifiers of Secondary Packages, in particular pallets, containing Primary Packages which prove to be or are allegedly defective, based on the Production Times or some other time-related Marking or Batch/Lot Identifiers marked on the Primary Packages.

The above-described Package Tracing Algorithm allows Packaged Consumer Products to be reliably traced with a reduced computational resource demand and tolerance.

The Package Tracing Algorithm may be further improved by taking also into account package waste during a Production Batch, and this could be implemented via an automatic data collection or a manual data entry.

## Claims

1. A Package Tracing System configured to trace Primary Packages produced in a Packaging System comprising a Packaging Line configured to produce and pack Primary Packages to form Secondary Packages, Secondary Packages being produced in a sequential order and formed with Primary Packages provided in a sequential order;
   wherein the Package Tracing System is configured to:

   • compute, for each Secondary Package, a Primary Package Sequence Number for the first Primary Package in the Secondary Package and a Primary Package Sequence Number for the last Primary Package in the Secondary Package;
   • compute, for each Secondary Package, a Primary Package Production Time for the first Primary Package in the Secondary Package and a Primary Package Production Time for the last Primary Package in the Secondary Package, based on the corresponding Primary Package Sequence Numbers; and
• store in a repository Primary Package Production Times for the first and the last Primary Packages in the Secondary Packages, along with associated Secondary Package Identifiers;

and wherein the Package Tracing System is further configured to compute a Primary Package Production Time by:

   • identifying in a Production Batch successive Time Sections such that in each Time Section the number of Primary Packages produced per time unit is constant;
   • computing the number of Primary Packages produced from the beginning of the Production Batch to the end of a Time Section based on the following formula:

$$ACCNP = \sum_{i=1}^{TSSN} NP_i$$

where:

   *ACCNP* is the number of Primary Packages produced from the beginning of the Production Batch to the end of a Time Section,
   *TSSN* is a Time Section Sequence Number, and
   *NPi* is the number of Primary Packages produced during a Time Section with Time Section Sequence Number equal to **i**, wherein **$NP_i = S \cdot D_i$**, where **S** is the Filling Machine Speed, expressed in Primary Packages per second, during the Time Section, and **$D_i$** is the Time Section Duration, expressed in seconds.

   • identifying the first Time Section in the Production Batch for which the following relation is satisfied:

$$ACCNP \geq PPSN$$

where *PPSN* is the Primary Package Sequence Number;
   • computing the Primary Package Production Time based on the following formula:

$$PPPT = AT - \frac{ACCNP - PPSN}{S}$$

where:

*PPPT* is the Primary Package Production Time; and

*AT* is the Start Time of the identified Time Section.

2. The Package Tracing System of claim 1, further configured to compute the Primary Package Sequence Numbers for the first and the last Primary Packages in a Secondary Package based on the following formulas:

$$PPSN_{(FIRST)} = 1 + \sum_{i=1}^{FP-1} PPISP_i$$

$$PPSN_{(LAST)} = 1 + \sum_{i=1}^{FP} PPISP_i$$

where:

*PPSN* is a Primary Package Sequence Number;
*FP* is a Secondary Package Sequence Number;
*i* is a Secondary Package Sequence Index; and
*PPISPi* is a number of Primary Packages in a Secondary Package with Secondary Package Sequence Index equal to i.

3. The Package Tracing System of claim 1 or 2, further configured to compute the Primary Package Production Times for the first and the last Primary Packages in a Secondary Package based on the following formulas:

$$PPSN_{(FIRST)} = \int_{BST}^{PPPT_{(FIRST)}} FSM(t)\, dt$$

$$PPSN_{(LAST)} = \int_{BST}^{PPPT_{(LAST)}} FSM(t)\, dt$$

where:

*PPSN* is the Primary Package Sequence Number;
*PPPT* is the Primary Package Production Time;
*BST* is a Production Batch Start Time; and
*FSM(t)* represents a number of Primary Packages produced per time unit during a Production Batch.

4. A Packaging System comprising:

• a Packaging Line configured to produce and pack Primary Packages to form Secondary Packages, Secondary Packages being produced in a sequential order and formed with Primary Packages provided in a sequential order; and
• the Package Tracing System of any one of the preceding claims.

5. Software loadable into the Package Tracing System of any one of the preceding claims 1 to 4, and designed to cause, when executed, the Package Tracing System to become configured as claimed in any one of the preceding claims 1 to 3.

**Patentansprüche**

1. Paketverfolgungssystem, das dafür ausgelegt ist, Primärpakete zu verfolgen, die in einem Verpackungssystem produziert werden, welches eine Verpackungslinie umfasst, die dafür ausgelegt ist, Primärpakete zu produzieren und zu verpacken, um Sekundärpakete zu bilden, wobei Sekundärpakete in einer sequenziellen Reihenfolge produziert werden und mit Primärpaketen gebildet werden, die in einer sequenziellen Reihenfolge bereitgestellt werden; wobei das Paketverfolgungssystem ausgelegt ist zum:

• Berechnen, für jedes Sekundärpaket, einer Primärpaket-Folgenummer für das erste Primärpaket in dem Sekundärpaket und einer Primärpaket-Folgenummer für das letzte Primärpaket in dem Sekundärpaket;
• Berechnen, für jedes Sekundärpaket, einer Primärpaket-Produktionszeit für das erste Primärpaket in dem Sekundärpaket und einer Primärpaket-Produktionszeit für das letzte Primärpaket in dem Sekundärpaket, basierend auf den entsprechenden Primärpaket-Folgenummern; und
• Speichern, in einem Archiv, von Primärpaket-Produktionszeiten für das erste und das letzte Primärpaket in den Sekundärpaketen, zusammen mit den zugehörigen Sekundärpaket-Kennungen;

und wobei das Paketverfolgungssystem ferner dafür ausgelegt ist, eine Primärpaket-Produktionszeit zu berechnen durch:

• Identifizieren, in einem Produktionslos, aufeinanderfolgender Zeitabschnitte, so dass in jedem Zeitabschnitt die Anzahl von Primärpaketen, die pro Zeiteinheit produziert werden, konstant ist;
• Berechnen der Anzahl von Primärpaketen, die vom Beginn des Produktionsloses bis zum Ende eines Zeitabschnitts produziert werden, auf Basis der folgenden Formel:

$$ACCNP = \sum_{i=1}^{TSSN} NP_i$$

wobei gilt:

> **ACCNP** ist die Anzahl von Primärpaketen, die vom Beginn des Produktionsloses bis zum Ende eines Zeitabschnitts produziert werden,
> **TSSN** ist eine Zeitabschnitt-Folgenummer, und
> **NPi** ist die Anzahl von Primärpaketen, die während eines Zeitabschnitts mit einer Zeitabschnitt-Folgenummer gleich **i** produziert werden; hierbei gilt: **NP$_i$=S·D$_i$,** wobei **S** die Füllmaschinengeschwindigkeit ist, ausgedrückt in Primärpaketen pro Sekunde während des Zeitabschnitts, und **D$_i$** die Zeitabschnittdauer ist, ausgedrückt in Sekunden;

> • Identifizieren des ersten Zeitabschnitts in dem Produktionslos, für den die folgende Beziehung erfüllt ist:

$$ACCNP \geq PPSN$$

> wobei **PPSN** die Primärpaket-Folgenummer ist;
> • Berechnen der Primärpaket-Produktionszeit basierend auf der folgenden Formel:

$$PPPT = AT - \frac{ACCNP - PPSN}{S}$$

> wobei gilt:

>> **PPPT** ist die Primärpaket-Produktionszeit; und
>> **AT** ist die Startzeit des identifizierten Zeitabschnitts.

2. Paketverfolgungssystem nach Anspruch 1, das ferner dafür ausgelegt ist, die Primärpaket-Folgenummern für das erste und das letzte Primärpaket in einem Sekundärpaket basierend auf den folgenden Formeln zu berechnen:

$$PPSN_{(FIRST)} = 1 + \sum_{i=1}^{FP-1} PPISP_i$$

$$PPSN_{(LAST)} = 1 + \sum_{i=1}^{FP} PPISP_i$$

wobei gilt:

> **PPSN** ist eine Primärpaket-Folgenummer;
> **FP** ist eine Sekundärpaket-Folgenummer;
> **i** ist ein Sekundärpaket-Folgeindex; und
> **PPISPi** ist eine Anzahl von Primärpaketen in einem Sekundärpaket mit einem Sekundärpaket-Folgeindex gleich **i**.

3. Paketverfolgungssystem nach Anspruch 1 oder 2, das ferner dafür ausgelegt ist, die Primärpaket-Produktionszeiten für das erste und das letzte Primärpaket in einem Sekundärpaket basierend auf den folgenden Formeln zu berechnen:

$$PPSN_{(FIRST)} = \int_{BST}^{PPPT_{(FIRST)}} FSM(t)\,dt$$

$$PPSN_{(LAST)} = \int_{BST}^{PPPT_{(LAST)}} FSM(t)\,dt$$

wobei gilt:

> **PPSN** ist die Primärpaket-Folgenummer;
> **PPPT** ist die Primärpaket-Produktionszeit;
> **BST** ist eine Produktionslos-Startzeit; und
> **FSM(t)** stellt eine Anzahl von Primärpaketen dar, die pro Zeiteinheit während eines Produktionsloses produziert werden.

4. Verpackungssystem, umfassend:

> • eine Verpackungslinie, die dafür ausgelegt ist, Primärpakete zu produzieren und zu verpacken, um Sekundärpakete zu bilden, wobei Sekundärpakete in sequenzieller Reihenfolge produziert und mit Primärpaketen gebildet werden, die in einer sequenziellen Reihenfolge bereitgestellt werden; und
> • das Paketverfolgungssystem nach einem der vorstehenden Ansprüche.

5. Software, die in das Paketverfolgungssystem nach einem der vorstehenden Ansprüche 1 bis 4 geladen werden kann und die dafür ausgelegt ist, bei Ausführung zu veranlassen, dass das Paketverfolgungssystem gemäß einem der vorstehenden Ansprüche 1 bis 3 konfiguriert wird.

**Revendications**

1. Système de suivi d'emballages configuré pour suivre des Emballages primaires produits dans un Système d'emballage comportant une Ligne d'emballage configurée pour produire et emballer des Emballages primaires afin de former des Emballages secondaires, les Emballages secondaires étant produits dans un ordre séquentiel et formés d'Emballages primaires fournis dans un ordre séquentiel ;

le Système de suivi d'emballages étant configuré pour :

• calculer, pour chaque Emballage secondaire, un Numéro d'ordre d'emballage primaire relatif au premier Emballage primaire de l'Emballage secondaire et un Numéro d'ordre d'emballage primaire relatif au dernier Emballage primaire de l'Emballage secondaire ;

• calculer, pour chaque Emballage secondaire, un Temps de production d'emballage primaire relatif au premier Emballage primaire de l'Emballage secondaire et un Temps de production d'emballage primaire relatif au dernier Emballage primaire de l'Emballage secondaire, d'après les Numéros d'ordre d'emballages primaires correspondants ; et

• stocker dans un référentiel des Temps de production d'emballage primaires relatifs aux premier et dernier Emballages primaires dans les Emballages secondaires, accompagnés d'Identifiants d'emballages secondaires associés ; et

le Système de suivi d'emballages étant en outre configuré pour calculer un Temps de production d'emballage primaire en :

• identifiant dans un Lot de production des Segments temporels successifs de telle façon que, dans chaque Segment temporel, le nombre d'Emballages primaires produits par unité de temps soit constant ;

• calculant le nombre d'Emballages primaires produits du début du Lot de production à la fin d'un Segment temporel selon la formule suivante :

$$ACCNP = \sum_{i=1}^{TSSN} NP_i$$

où :

$ACCNP$ est le nombre d'Emballages primaires produits du début du Lot de production à la fin d'un Segment temporel,
$TSSN$ est un Numéro d'ordre de segment temporel, et
$NP_i$ est le nombre d'Emballages primaires produits pendant un Segment temporel dont le Numéro d'ordre de segment temporel est égal à $i$, avec $NP_i = S \cdot D_i$, où $S$ est la vitesse de la Machine de remplissage, exprimée en Emballages primaires par seconde, pendant le Segment temporel, et $D_i$ est la durée du Segment temporel, exprimée en secondes.

• identifiant le premier Segment temporel du Lot de production pour lequel la relation suivante est satisfaite :

$$ACCNP \geq PPSN$$

où $PPSN$ est le Numéro d'ordre d'emballage primaire ;

• calculant le Temps de production d'emballage primaire selon la formule suivante :

$$PPPT = AT \frac{ACCNP - PPSN}{S}$$

où :

$PPPT$ est le Temps de production d'emballage primaire ; et
$AT$ est l'Instant de début du Segment temporel identifié.

2. Système de suivi d'emballages selon la revendication 1, configuré en outre pour calculer les Numéros d'ordre d'emballages primaires relatifs aux premier et dernier Emballages primaires dans un Emballage secondaire selon les formules suivantes :

$$PPSN_{(FIRST)} = 1 + \sum_{i=1}^{FP-1} PPISP_i$$

$$PPSN_{(LAST)} = 1 + \sum_{i=1}^{FP} PPISP_i$$

où :

$PPSN$ est un Numéro d'ordre d'emballage primaire ;
$FP$ est un Numéro d'ordre d'emballage secondaire ;
$i$ est un Indice de suite d'emballages secondaires ; et
$PPISP_i$ est un nombre d'Emballages primaires dans un Emballage secondaire dont l'Indice de suite d'emballages secondaires est égal à $i$.

3. Système de suivi d'emballages selon la revendication 1 ou 2, configuré en outre pour calculer le Temps de production d'emballage primaires relatif aux premier et dernier Emballages primaires dans un Emballage secondaire selon les formules suivantes :

$$PPSN_{(FIRST)} = \int_{BST}^{PPPT_{(FIRST)}} FSM(t)dt$$

$$PPSN_{(LAST)} = \int_{BST}^{PPPT_{(LAST)}} FSM(t)dt$$

où :

> $PPSN$ est le Numéro d'ordre d'emballage primaire ;
> $PPPT$ est le Temps de production d'emballage primaire ;
> $BST$ est un Instant de début du Lot de production ; et
> $FSM(t)$ représente un nombre d'Emballages primaires produits par unité de temps pendant un Lot de production.

4. Système d'emballage comportant :

   > • une Ligne d'emballage configurée pour produire et emballer des Emballages primaires afin de former des Emballages secondaires, les Emballages secondaires étant produits dans un ordre séquentiel et formés d'Emballages primaires fournis dans un ordre séquentiel ; et
   > • le Système de suivi d'emballages selon l'une quelconque des revendications précédentes.

5. Logiciel pouvant être chargé dans le Système de suivi d'emballages selon l'une quelconque des revendications 1 à 4 qui précèdent, et conçu pour faire en sorte, lorsqu'il est exécuté, que le Système de suivi d'emballages devienne configuré selon l'une quelconque des revendications 1 à 3 qui précèdent.

# FIG. 1

Packaging System

Packaging Line

Packaging Line
Monitoring System

Line Controller

Communication Network

# FIG. 2

EP 2 472 345 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005203653 A1
- JP 2008056433 A
- WO 2009083594 A
- WO 2009083595 A
- WO 2009083597 A
- WO 2009083598 A